# EUROPÄISCHE PATENTANMELDUNG

(11) **EP 0 918 146 A1**
(43) Veröffentlichungstag der Anmeldung: **26.05.1999**
(21) Anmeldenummer: 97810882.7
(22) Anmeldetag: 19.11.1997
(51) Int. Cl.: F01N 3/28, F01N 3/20

(54) **Einrichtung zum Abbau von Schadstoffen in Abgasen mittels Katalysatoren**

(71) Anmelder: Sulzer Chemtech AG, 8404 Winterthur (CH)
(72) Erfinder: Tauscher, Willy, Dr., 8404 Winterthur (CH)
(74) Vertreter: Heubeck, Bernhard

(57) **Zusammenfassung**

Die Einrichtung (1) ist insbesondere für Automobile zum Abbau von Schadstoffen in Abgasen mittels Katalysatoren vorgesehen. Sie umfasst einen Katalysatorträger (2), der eine Vielzahl von parallel angeordneten Kanälen (20) aufweist und der in einem Gehäuse (10) enthalten ist, sowie eine Zuführleitung (11) und einen Anströmtrichter (13) zwischen Zuführleitung und Gehäuse. Die Zuführleitung ist gegebenenfalls mit Einbauten (6, 7) so ausgebildet, dass ein am Eingang (113) des Anströmtrichters zuströmendes Abgas (5) über dessen Querschnitt weitgehend homogene Verteilungen der Temperatur, der Strömungsgeschwindigkeit und der Schadstoffkonzentrationen aufweist. Im Anströmtrichter sind Kanäle (30, 31, 32) bildende Einbauten (3) angeordnet, die eine rückströmungsfreie Erweiterung der Gasströmung bewirken.

## Beschreibung

Die Erfindung betrifft eine Einrichtung zum Abbau von Schadstoffen in Abgasen mittels Katalysatoren, insbesondere für Automobile, gemäss Oberbegriff von Anspruch 1.

Schadstoffe, die in Abgasen von Verbrennungsmotoren enthalten sind, nämlich Stickoxide NOₓ, Kohlenmonoxid CO und unverbrannte Kohlenwasserstoffe KW, werden mit Vorteil mittels Katalysatoren abgebaut, indem das zu behandelnde Abgas mit einer beschichteten und katalytisch wirksamen Oberfläche einer Trägerstruktur in Kontakt gebracht wird. Bei Automobilen werden als Katalysatorträger mehrheitlich Wabenstrukturen aus keramischem Material eingesetzt. Ein derartiger Wabenkatalysator umfasst parallel angeordnete Kanäle, die in einer grossen Anzahl vorliegen, so dass die Katalysatorstruktur eine grosse Oberfläche pro Volumeneinheit aufweist.

Der Wabenkatalysator hat im Vergleich mit der zu ihm führenden Abgasleitung einen wesentlich grösseren Durchmesser. Ein Übergangsstück von der Zuführleitung zum Katalysatorträger ist in Automobilen aus Platzgründen als kurzer Anströmtrichter ausgebildet. Für ein Gas, das einen solchen Anströmtrichter durchfliesst, ist das Strömungsprofil aufgrund von Rückströmungen extrem uneinheitlich. Das Abgas tritt daher mit einer schnellen Kernstömung und einer langsamen Randströmung in die Katalysatorstruktur ein. Folglich ergibt sich im Zentrum eine Überbelastung, im Randbereich eine Unterbelastung. Der Wabenkatalysator altert daher im Zentrum rasch; andererseit ist er schlecht ausgenutzt.

Ein besser ausgenutzter Abgaskatalysator kann hingegen kleiner ausgebildet sein. Er beansprucht weniger Platz, hat ein kleineres Gewicht und benötigt eine geringere Menge an katalytisch wirkenden Stoffen, die teuer sind. Ferner ist ein kleinerer Abgaskatalysator beim Kaltstart rascher aufgewärmt und damit auch schneller funktionstüchtig. Da bekanntlich ein Grossteil der Schadstoffe CO und KW während den ersten Minuten nach dem Kaltstart emittiert werden, ist ein rasches Erreichen einer Temperatur von 270 - 300°C, bei der die chemische Umwandlung der Schadstoffe einsetzt.

Aufgabe der Erfindung ist es, für einen Abgaskatalysator, dessen Katalysatorträger eine Vielzahl von parallel angeordneten Kanälen und einen kurzen Anströmtrichter aufweist, Mittel zu schaffen, mit denen sich die Mängel bezüglich den genannten Über- sowie Unterbelastungen beseitigen lassen. Die in Anspruch 1 definierte Einrichtung löst diese Aufgabe.

Die Einrichtung ist insbesondere für Automobile zum Abbau von Schadstoffen in Abgasen mittels Katalysatoren vorgesehen. Sie umfasst einen Katalysatorträger, der eine Vielzahl von parallel angeordneten Kanälen aufweist und der in einem Gehäuse enthalten ist, sowie eine Zuführleitung und einen Anströmtrichter zwischen Zuführleitung und Gehäuse. Die Zuführleitung ist gegebenenfalls mit Einbauten so ausgebildet, dass ein am Eingang des Anströmtrichters zuströmendes Abgas über dessen Querschnitt weitgehend homogene Verteilungen der Temperatur, der Strömungsgeschwindigkeit und der Schadstoffkonzentrationen aufweist. Im Anströmtrichter sind Kanäle bildende Einbauten angeordnet, die eine rückströmungsfreie Erweiterung der Gasströmung bewirken.

Die abhängigen Ansprüche 2 bis 11 betreffen vorteilhafte Ausführungsformen der erfindungsgemässen Einrichtung.

Damit ein Wabenkatalysator optimal funktioniert, müssen an dessen Eintritt im zu behandelnden Abgas homogene Verhältnisse vorliegen: über dem Strömungsquerschnitt müssen die Verteilungen der Abgastemperatur, der Strömungsgeschwindigkeit und der Konzentrationen der Schadstoffe homogen sein. Turbulenzen der Leerrohrströmung können eine ausreichende Homogenität am Eintritt in den Anströmtrichter bewirken. Gemäss der Erfindung verhindern im Anströmtrichter Einbauten, die beispielsweise als Diffusoren ausgebildet sind, das Entstehen von Rückströmungen. So bleibt beim Durchtritt durch den Anströmtrichter die Homogenität des Abgases erhalten, und das Gas beaufschlagt die Eintrittsfläche des Katalysatorträgers gleichmässig. Damit ist die Voraussetzung für eine optimale Funktion des Wabenkatalysators erfüllt.

Homogene Temperatur- und Geschwindigkeitsverteilungen über dem Querschnitt des Abgaskatalysators ergeben auch ein einheitliches Anspringverhalten beim Kaltstart. Dadurch werden weniger Schadstoffe ausgestossen.

Als Diffusoren ausgebildete Einbauten sind als LAD ("Large-Angle-Diffuser") aus der US-A 5 165 452 bekannt. Dieser LAD ist aus kegelstumpfförmigen Mantelflächen gebildet, die konzentrisch zum Anströmtrichter angeordnet sind. In einer vorteilhaften Ausbildung umfasst der LAD mindestens zwei kegelstumpfförmige Mantelflächen, deren zugeordneten Kegelspitzen auf einem Punkt liegen; ferner spannen die Eintrittsquerschnitte der Einbauten mit ihren Rändern eine Fläche auf, die eine gegen die Strömungsrichtung sich verjüngende Form hat. Der LAD zeichnet sich zusätzlich zu seiner Eigenschaft, Homogenitäten aufrechtzuerhalten, durch einen kleineren Druckabfall aus; denn in einem Diffusor ergibt sich eine Druckerhöhung, bei der kinetische Energie der Strömung in potentielle Energie umgesetzt wird (Gesetz nach Bernoulli). Ein kleinerer Druckabfall reduziert den Abgasgegendruck, was die Motorenleistung erhöht.

Ein Abströmtrichter, der stromabwärts nach dem Wabenkatalysator angeordnet ist, enthält mit Vorteil einen Konfusor, der in Form eines in Strömungsrichtung umgekehrt gerichteten LAD eingebaut ist. Ein solcher Konfusor verbessert die Ausströmbedingungen am Ausgang des Katalysatorträgers.

Die Geometrie der kegelstumpfförmigen Mantelfläche des LAD am Ein- und Austritt des Abgaskatalysators entspricht der Form dessen Querschnitts. Diese kann beispielsweise kreisrund, oval, elliptisch, rechteckig oder quadratisch sein. Je nach Einbau- und Platzverhältnissen kann auch eine andere Querschnittsform für den Abgaskatalysator bzw. den LAD besser passend sein.

Aus der EP-A 0 638 711 (= P.6586) ist ein Abgaskatalysator mit Kreuzkanalstruktur bekannt: Die Trägerstruktur für das katalytische Material besteht aus einem oder mehreren Stapeln von Lagen parallel angeordneter Kanäle. Die Lagen sind im wesentlichen parallel zur Hauptströmungsrichtung des Abgases ausgerichtet. Kanäle benachbarter Lagen sind gegeneinander offen und kreuzen einander. Die Querschnittsfläche der Trägerstruktur hat entlang der Hauptströmungsrichtung einen variablen Flächeninhalt, wobei diese variable Fläche einem Gehäuse mit sich änderndem Querschnitt entspricht. Bei der erfindungsgemässen Einrichtung kann für die Einbauten des Anström- und/oder Abströmtrichters eine derartige Kreuzkanalstruktur vorgesehen sein. Mit Vorteil werden die Oberflächen dieser Einbauten ebenfalls mit katalytisch wirksamem Material beschichtet.

Falls in der Zuführleitung an der Übertrittstelle zum Anströmtrichter keine ausreichende Homogenität vorliegt, ist es erforderlich, mittels Einbauten die Eintrittsbedingungen zu verbessern. Es können dazu beispielsweise statische Mischer vorgesehen werden, wie sie in der EP-A 0 546 989 (= P.6463) beschrieben sind: Mindestens zwei Leitflächen sind an der Wand des Mischers - hier der Zuführleitung - angebracht, wobei die Leitflächen einen Winkel von 10° bis 45° zur Strömungsrichtung bilden und sich gegen innen verbreitern. Solche statischen Mischer erzeugen bei einem geringen Druckabfall eine ausreichend gute Mischwirkung. Dank der einfachen Geometrie und bei einer Fertigung mit grossen Stückzahlen sind diese statischen Mischer preisgünstig. Ein anderer statischer Mischer mit einfacher Geometrie, der sich auch gut verwenden lässt, ist aus der EP-A 0 800 857 (= P.6730) bekannt.

Der statische Mischer kann auch gleichzeitig dafür eingesetzt werden, um dem Abgas vor dem Wabenkatalysator ein Additiv zuzumischen. Insbesondere bei Lastwagen kann es vorteilhaft sein, Ammoniakwasser (NH₄OH) als Reduktionsmittel in den heissen Abgasstrom einzudüsen, in dem dieses Additiv vollständig verdampft.

Um die Aufheizzeit des Abgaskatalysators beim Kaltstart zu verkürzen, kann der statische Mischer auch dafür eingesetzt werden, um dem Abgas einen Brennstoff zuzumischen, der anschliessend gezündet wird. Damit erhöht sich die Temperatur des Abgases und des Katalysators. Er ist sofort funktionstüchtig, und der Ausstoss an Schadstoffen wird reduziert.

Grosse Motoren können mehr als eine Abgasleitung aufweisen. Der statische Mischer kann auch eingesetzt werden, um die Abgase von verschiedenen Abgasleitungen nach deren Zusammmenführung vor dem Abgaskatalysator zu homogenisieren.

Die Abgasleitung weist in der Regel mehrere Krümmer auf. Ohne besondere Massnahmen entstehen in einem Krümmer Zonen mit Rückströmung, so dass ein zuerst einheitliches Geschwindigkeitsprofil nach dem Krümmer nicht mehr einheitlich ist. Mit Strömungsleitblechen, wie sie in der US-A 5 197 509 ("CRV Rotation-Vane") offenbart sind und mit denen im Krümmer eine Strömung in Rotation versetzt wird, lassen sich Zonen mit Rückströmung verhindern. Der Einbau solcher Strömungsleitbleche direkt vor dem Kümmer erzeugt ein homogenes Geschwindigkeitsprofil nach dem Krümmer, wobei sich gleichzeitig der Druckabfall im Krümmer um 25 bis 50 % verkleinert. Ein kleinerer Druckabfall reduziert den Abgasgegendruck, was die Motorenleistung erhöht. Allerdings vermögen solche Einbauten oft nicht, homogene Konzentrations- und Temperaturprofile herzustellen. Diese Homogenitäten sind aber für ein optimales Funktionieren des Wabenkatalysators ebenso wichtig wie ein homogenes Geschwindigkeitsprofil. Beispielsweise führen zu hohe lokale Konzentrationen von Kohlenwasserstoffen zu hohen adiabatischen Temperaturspitzen, die den Katalysator desaktivieren. Zur Beseitigung dieses Mangels eignen sich die bereits genannten statischen Mischer.

Nachfolgend wird die Erfindung anhand der Zeichnungen erläutert. Es zeigen:
- Fig. 1: eine erfindungsgemässe Einrichtung,
- Fig. 2: einen Anströmtrichter mit homogenisierenden Einbauten.

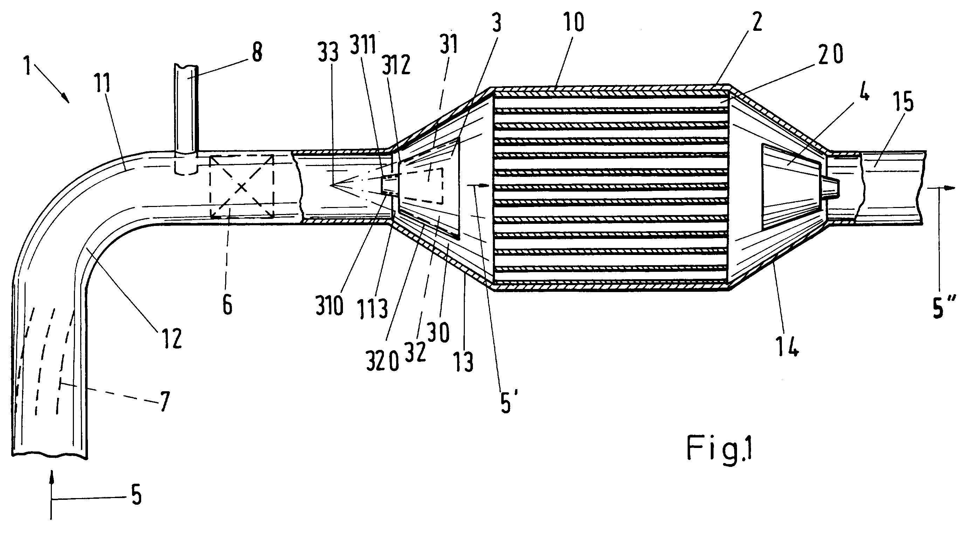

Die in Fig.1 dargestellte Einrichtung 1 mit einem Abgaskatalysator für ein Abgas 5 umfasst folgende Teile: einen Wabenkatalysator mit einem Katalysatorträger 2, der eine Vielzahl von parallel angeordneten Kanälen 20 ("Wabenkanäle") enthält; ein Gehäuse 10 um den Katalysatorträger 2; eine Zuführleitung 11 mit einem Krümmer 12, der häufig einen Winkel kleiner als 90° aufweist; einen Anströmtrichter 13 mit als Diffusoren ausgebildeten Einbauten 3; einen statischen Mischer 6, eine Einspeiseleitung 8 für ein Additiv und Einbauten 7, die als strömungslenkende Leiteinrichtung ausgebildet eine Rotation in dem sie durchströmenden Abgas 5 bewirken (CRV, siehe oben); ferner einen Konfusor 4 in einem Abströmtrichter 14 vor einer Abführleitung 15.

Im Anströmtrichter 13 mit einem Eintrittsquerschnitt 113 unterteilen die Einbauten 3 in ihrem Einwirkbereich die Querschnitte des Anströmtrichters 13 in Teilfächen, die in Strömungsrichtung 5' gleichmässig zunehmende Flächeninhalte aufweisen.

Der Anströmtrichter 13 und seine Einbauten 3 sind aus konzentrischen, kegelstumpfförmigen Mantelflächen gebildet, wobei die Einbauten 3 in dem dargestellten Beispiel zwei solche Mantelflächen 310 und 320 umfassen. Die den Kegelstümpfen zugeordneten Spitzen liegen auf einem Punkt 33. Die Eintrittsquerschnitte der Einbauten 3 spannen mit ihren Rändern 311 und 312 eine Fläche auf, die eine gegen die Strömungsrichtung 5' sich verjüngende Form hat. Die Einbauten 3 bilden zusammen mit dem Anströmtrichter 13 zwei sich erweiternde Ringspaltkanäle 30 und 32 sowie einen konischen Kanal 31 im Zentrum.

Die Konfusoren 4 haben den gleichen Aufbau wie die als Diffusoren ausgebildeten Einbauten 3; sie sind lediglich umgekehrt zur Strömungsrichtung 5'' in dem Abströmtrichter 14 angeordnet.

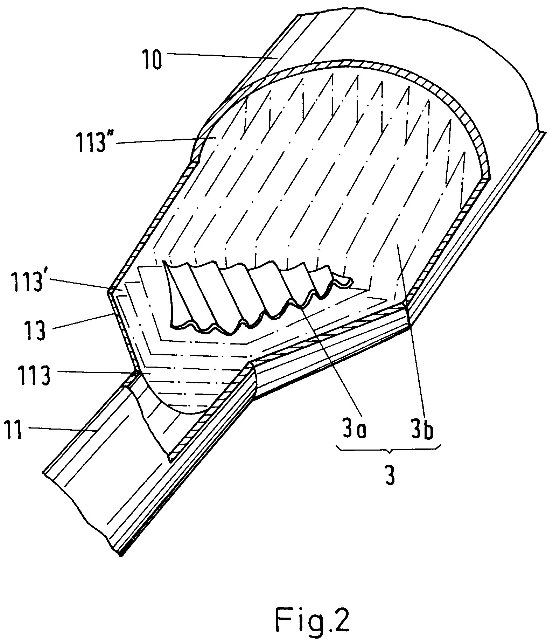

Fig. 2 stellt den Anströmtrichter 13 mit Einbauten 3 dar, die aus zwei Kreuzkanalstruktur aufweisenden Elementen 3a und 3b zusammengesetzt ist. Im ersten Element 3a vergrössert sich der kreisförmige Querschnitt 113 der Zuführleitung 11 zu einem elliptischen Querschnitt 113', wobei der minimale Durchmesser der Ellipse im wesentlichen gleich dem Durchmesser der Zuführleitung 11 ist. Das zweite Element 3b besteht aus (vertikalen) Lagen, die zu den (horizontalen) Lagen des ersten Element 3a quer ausgerichtet sind. In diesem Element 3b vergrössert sich der Querschnitt 113' weiter zum Querschnitt 113'' des Gehäuses 10, in dem der Wabenkatalysator 2 (siehe Fig.1) enthalten ist.

Um den Stoffaustausch in den Wabenkanälen 20 zu verbessern, kann es sinnvoll sein, den Katalysatorträger 2 aus mehreren hintereinander angeordneten Zylindersegmenten aufzubauen und Lücken zwischen benachbarten Segmenten frei zu lassen. Die Strömung des Abgases wird beim Durchtritt durch eine Lücke gestört, so dass laminare Grenzschichten, die bekanntlich einen Stoffaustausch beeinträchtigen (Stofftransport durch Diffusion), sich in einem verminderten Ausmass ausbilden. Die Schadstoffe werden so durch Konvektion in der turbulenten Strömung näher zu den katalytisch wirksamen Oberflächen transportiert.

Unter Umständen kann es sinnvoll sein, den statischen Mischer 6 vor den Einbauten 7 (CRV) einzubauen. Dies kann dann zutreffen, wenn beispielsweise Wirbel nach dem statischen Mischer 6 bzw. vor dem Wabenkatalysator unerwünscht sind oder wenn es die Platzverhältnisse erfordern.

## Patentansprüche

1. Einrichtung (1) zum Abbau von Schadstoffen in Abgasen mittels Katalysatoren, insbesondere für Automobile, mit mindestens einem Katalysatorträger (2), der eine Vielzahl von parallel angeordneten Kanälen (20) umfasst und der in einem Gehäuse (10) enthalten ist, sowie mit einer Zuführleitung (11) und einem Anströmtrichter (13) zwischen Zuführleitung und Gehäuse,
dadurch gekennzeichnet, dass die Zuführleitung gegebenenfalls mit Einbauten (6, 7) so ausgebildet ist, dass ein am Eingang (113) des Anströmtrichters zuströmendes Abgas (5) über dessen Querschnitt weitgehend homogene Verteilungen der Temperatur, der Strömungsgeschwindigkeit und der Schadstoffkonzentrationen aufweist, dass im Anströmtrichter Kanäle (30, 31, 32) bildende Einbauten (3) angeordnet sind und dass diese Kanäle eine rückströmungsfreie Erweiterung der Gasströmung bewirken.

2. Einrichtung nach Anspruch 1, dadurch gekennzeichnet, dass die Kanäle (30, 31, 32) der Einbauten (3) im Anströmtrichter (13) als Diffusoren ausgebildet sind.

3. Einrichtung nach Anspruch 2, dadurch gekennzeichnet, dass der Anströmtrichter (13) und seine Einbauten (3) aus konzentrischen, kegelstumpfförmigen Mantelflächen (310, 320) gebildet sind, wobei insbesondere diese Einbauten mindestens zwei kegelstumpfförmige Mantelflächen umfassen, deren zugeordneten Kegelspitzen zumindest angenähert auf einem Punkt (33) liegen, und dass die Eintrittsquerschnitte der Einbauten mit ihren Rändern (311, 312) jeweils eine Fläche aufspannen, die eine gegen die Strömungsrichtung (5') sich verjüngende Form hat.

4. Einrichtung nach Anspruch 1, dadurch gekennzeichnet, dass die Einbauten (3) des Anströmtrichters (13) eine Kreuzkanalstruktur (3a, 3b) aufweisen.

5. Einrichtung nach einem der Ansprüche 1 bis 4, dadurch gekennzeichnet, dass die Zuführleitung (11) vor dem Eingang (113) zum Anströmtrichter (13) Einbauten (6) enthält, die mit statischen Elementen eine Durchmischung des Abgases und/oder die Zumischung eines vor den Mischeinbauten über eine Einspeiseleitung (8) zugeführten Additivs bewirken.

6. Einrichtung nach einem der Ansprüche 1 bis 5, dadurch gekennzeichnet, dass vor Krümmern (12) der Zuführleitung (11) Einbauten (7) enthalten sind, die mit einer strömungslenkenden Leitvorrichtung im durchströmenden Abgas (5) eine Rotation bewirken.

7. Einrichtung nach einem der Ansprüche 1 bis 6, dadurch gekennzeichnet, dass in einem Abströmtrichter (14) zwischen dem Gehäuse (10) des Katalysatorträgers (2) und einer Abführleitung (15) Einbauten (4) angeordnet sind, die als Konfusoren ausgebildet sind.

8. Einrichtung nach Anspruch 7, dadurch gekennzeichnet, dass der Abströmtrichter (14) sowie seine Einbauten (4) aus konzentrischen, kegelstumpfförmigen Mantelflächen gebildet sind und dass insbesondere diese Einbauten mindestens zwei Mantelflächen umfasst, deren zugeordneten Kegelspitzen zumindest angenähert auf einem Punkt liegen, wobei die Eintrittsquerschnitte der Einbauten mit ihren Rändern jeweils eine Fläche aufspannen, die eine mit der Strömungsrichtung (5'') sich verjüngende Form hat.

9. Einrichtung nach einem der Ansprüche 1 bis 8, dadurch gekennzeichnet, dass die Einbauten (3, 4, 6, 7) aus Metallblechen gefertigt sind, die gegen heisses Abgas (5) beständig sind.

10. Einrichtung nach einem der Ansprüche 1 bis 9, dadurch gekennzeichnet, dass die Oberflächen der Einbauten (3, 4, 6, 7) zumindest teilweise mit katalytisch wirksamem Material beschichtet sind.

11. Einrichtung nach einem der Ansprüche 1 bis 10, dadurch gekennzeichnet, dass der Katalysatorträger (2) aus mehreren hintereinander angeordneten Zylindersegmenten aufgebaut ist, wobei Lücken zwischen benachbarten Segmenten frei bleiben.
